# EUROPÄISCHE PATENTANMELDUNG

(11) **EP 4 339 137 A1**
(43) Veröffentlichungstag der Anmeldung: **20.03.2024**
(21) Anmeldenummer: 23193969.5
(22) Anmeldetag: 29.08.2023
(51) Int. Cl.: B65G 43/08, B65G 43/10, B65G 47/08, B65G 47/84

(54) **VORRICHTUNG UND VERFAHREN ZUM BILDEN VON BEHÄLTERPULKS**

(30) Priorität: 09.09.2022 DE 102022123046
(71) Anmelder: KRONES Aktiengesellschaft, 93073 Neutraubling (DE)
(72) Erfinder: Schuesslburner, Helmut, 93073 Neutraubling (DE); Beyer, Michael, 93073 Neutraubling (DE); Roidl, Wolfgang, 93073 Neutraubling (DE); Holzer, Christian, 93073 Neutraubling (DE); Frankenberger, Günter, 93073 Neutraubling (DE); Senn, Konrad, 93073 Neutraubling (DE)
(74) Vertreter: Grünecker Patent- und Rechtsanwälte PartG mbB

(57) **Zusammenfassung**

Die Erfindung betrifft eine Vorrichtung zum Bilden von Behälterpulks (P0-P2) mit vorbestimmter Behälterstückzahl aus einem kontinuierlichen Behälterstrom in einem Transportbereich einer Abfüllanlage, umfassend ein Einlaufförderband (B1), ein Auslaufförderband (B5), ein zwischen dem Einlaufförderband (B1) und dem Auslaufförderband (B5) zwischengeschaltetes Transportband (T), sowie eine Antriebstation (A) zum Einfahren von Trennelementen (S1-S3) und Ausbilden von Behälterpulks (P0-P2). Dabei ist die Geschwindigkeit eines in den Bereich des Transportbands (T) eingefahrenen Trennelements (S1-S3) auf höchstens die erste Geschwindigkeit (V1), insbesondere auf eine um maximal 2% niedrigere Geschwindigkeit als die erste Geschwindigkeit (V1), gesteuert, solange der nachfolgende Behälterpulk (P0-P2) nicht vollständig auf das Transportband (T) eingelaufen ist. Die Erfindung betrifft ferner ein Verfahren zum Bilden von Behälterpulks (P0-P2).

## Beschreibung

### Gebiet der Technik

Die Erfindung betrifft eine Vorrichtung zum Bilden von Behälterpulks in einem Transportbereich insbesondere einer Abfüllanlage, sowie ein Verfahren zum Betreiben einer solchen Vorrichtung.

### Stand der Technik

Abfüllanlagen werden genutzt, um Flüssigkeiten in Behälter abzufüllen und für einen nachfolgenden Vertrieb zu gruppieren und zu verpacken. In solchen Abfüllanlagen kommt es vor, dass einbahnig kontinuierlich einlaufende Behälter für die Weiterbehandlung auf zwei oder mehr Bahnen verteilt werden müssen. Dies soll möglichst so durchgeführt werden, dass die Anlagenleistung nicht verringert wird und die Behälter dabei sicher gehandhabt werden. In anderen Anwendungen müssen Behälterpulks quer zur Förderrichtung auf Puffertische überschoben werden. Dies soll ebenfalls möglichst ohne Leistungsverlust durchgeführt werden.

Verteilvorrichtungen sind im Stand der Technik bekannt. In DE 202 00 794 U1 ist eine Vorrichtung zum Verteilen von Behältern von einem einreihigen Zuförderer auf einen mehrreihigen Abförderer offenbart. Dieser nutzt ein Bremselement, um einen nachfolgenden Behälterstrom in Bezug auf die vorauseilenden Behälter zu verlangsamen. Dadurch wird eine kontrollierte Lücke im Behälterstrom geschaffen, welche die Schaltung eines Weichenelements des Abförderers ermöglicht. Beim Abbremsen kann es allerdings zu Staudruckschäden an den Behältern kommen.

Eine andere technische Lösung wird in FR 3 038 307 A1 offenbart, die eine Vorrichtung zur Versorgung einer Aufnahmefläche zwischen aufeinanderfolgenden Stationen an einem Fließband offenbart. Anhand eines Pufferfördermittels wird in der FR 3 038 307 A1 die Kompaktheit eines Behälterstroms im gesamten Ablauf bewahrt. Das Auftreten von Staudruckschäden wird hier dadurch verhindert, dass es zu keiner Zeit zu einer Lückenbildung zwischen Behälterpulks durch Abbremsen der Behälter kommt. Vielmehr wird eine Pufferfläche bereitgestellt, die unter Bewahrung der Kompaktheit des Behälterstroms bestückt wird, während Behälter in einem Auslaufförderer quer auf die Aufnahmefläche überschoben werden.

### Beschreibung der Erfindung

Ausgehend von der Verteilvorrichtung der DE 202 00 794 U1 ist es Aufgabe der vorliegenden Erfindung, eine Verteilvorrichtung auszubilden, die es erlaubt, Behälterpulks für die Verteilung auf mehrere Bahnen bereitzustellen, wobei der Staudruck auf die Behälter trotz Lückenbildung verringert wird.

Erfindungsgemäß wird die Aufgabe durch eine Vorrichtung zum Bilden von Behälterpulks mit vorbestimmter Behälterstückzahl aus einem kontinuierlichen Behälterstrom in einem Transportbereich, insbesondere einer Abfüllanlage nach Anspruch 1, gelöst. Die Vorrichtung umfasst ein Einlaufförderband zur Aufnahme eines Behälterstroms, welches mit einer ersten Geschwindigkeit antreibbar ist, ein Auslaufförderband, welches mit einer zweiten Geschwindigkeit größer als die erste Geschwindigkeit antreibbar ist, ein zwischen dem Einlaufförderband und dem Auslaufförderband zwischengeschaltetes Transportband, welches so ausgebildet ist, dass es zumindest zeitweise mit mindestens der zweiten Geschwindigkeit antreibbar ist, sowie eine Antriebstation zum Einfahren von einem oder mehreren Trennelementen in den Behälterstrom.

Die Antriebstation ist dabei so ausgebildet, dass zum Ausbilden von Behälterpulks nach Einlaufen der vorbestimmten Behälterstückzahl ein Trennelement im Bereich des Einlaufförderbands in den Behälterstrom eingefahren wird und vor den im Behälterstrom nachfolgenden Behältern mitfährt. Dabei ist die Geschwindigkeit eines in den Bereich des Transportbands eingefahrenen Trennelements auf höchstens die erste Geschwindigkeit, insbesondere auf eine um maximal 2% niedrigere Geschwindigkeit als die erste Geschwindigkeit, gesteuert, solange der nachfolgende Behälterpulk nicht vollständig auf das Transportband eingelaufen ist.

Dank der Erfindung kann durch den Geschwindigkeitsunterschied eine Lücke zwischen zwei Behälterpulks gezogen werden, ohne Änderung der Taktzeit, wobei durch den Einsatz des Trennelements ein Behälterpulk auf einer niedrigen Geschwindigkeit gehalten werden kann, selbst wenn das Transportband darunter schneller läuft. Gleichzeitig stabilisiert das Trennelement den nachlaufenden Pulk.

Läuft das Trennelement mit einer Geschwindigkeit, die geringer als die erste Geschwindigkeit ist, kann der Behälterpulk zusammengehalten werden, da durch die leichte Übergeschwindigkeit des Bandes die Behälter gegen das Trennelement geschoben werden ohne dabei einen nennenswerten Staudruck auf die Behälter aufzubauen. Im Vergleich zum Stand der Technik werden die Behälter nicht abgebremst, sondern laufen immer zumindest mit der Geschwindigkeit des Trennelements, dessen Geschwindigkeit bevorzugt der von den anderen Stationen der Anlage bestimmten Gesamtmaschinenleistung entspricht.

Läuft das Trennelement mit einer geringeren Geschwindigkeit als die erste Geschwindigkeit V1, bedeutet dies somit, dass ein mit der ersten Geschwindigkeit V1 laufendes Band, beispielsweise das Einlaufband, etwas schneller läuft als die Gesamtmaschinenleistung.

Man versteht unter Taktzeit die Dauer zwischen den jeweils ersten Behältern zweier direkt aufeinander folgenden Behälterpulks. Diese bleibt in der Vorrichtung gleich, unabhängig davon, ob schon die Lücke zwischen zwei aufeinanderfolgenden Behälterpulks besteht oder nicht. Diese Lücke wird beispielsweise, wie oben erwähnt, benötigt, um ggf. einen Behälterpulk in einer nachfolgenden Station quer zur Förderrichtung der Behälter überschieben zu können, ohne dabei den nachfolgenden Behälterstrom anhalten zu müssen.

In einer Ausführungsform kann die Antriebstation so ausgebildet sein, dass die Geschwindigkeit eines auf das Transportband eingefahrenen Trennelements auf die zweite Geschwindigkeit beschleunigt wird, wenn, insbesondere sobald, der dem Trennelement nachlaufende Behälterpulk vollständig auf das Transportband eingefahren ist.

Durch die Bereitstellung der Übergeschwindigkeit erst wenn der Behälterpulk vollständig auf das Transportband eingefahren ist, wobei das nachfolgende Trennelement und der nachfolgende Behälterstrom noch mit geringerer Geschwindigkeit fährt, kann sich eine Lücke bilden, wobei der gesamte Pulk weiterhin durch die gleichzeitige Beschleunigung aller Behälter des Pulks zusammenbleiben.

In einer Ausführungsform kann das Transportband so ausgebildet sein, dass es mindestens immer dann in der zweiten Geschwindigkeit oder einer höchstens um 2% größeren Geschwindigkeit als die zweite Geschwindigkeit angetrieben wird, wenn ein Trennelement auf die zweite Geschwindigkeit beschleunigt ist. Weiter kann das Transportband so ausgebildet sein, dass es gleichzeitig mit dem Trennelement oder zeitlich vorher und mit dem gleichen Beschleunigungsprofil beschleunigt wird, beispielsweise höchstens 1/10 Sekunde vorher. In dieser Ausführungsform wird sichergestellt, dass ein Behälterpulk mit dem beschleunigten Trennelement beschleunigt und somit zusammenbleibt. Wird die Geschwindigkeit des Transportbands so gesteuert, dass sie größer als die zweite Geschwindigkeit ist, wenn das Trennelement auf die zweite Geschwindigkeit beschleunigt wurde, kann auch im Bereich des Transportbands der Behälterpulk zusammengehalten werden, wenn das Trennelement mit der zweiten Geschwindigkeit fährt.

Durch die leichte Übergeschwindigkeit des Bandes werden dann weiter die Behälter gegen das Trennelement geschoben, ohne dabei einen nennenswerten Staudruck auf die Behälter aufzubauen.

In einer Ausführungsform kann die Vorrichtung mindestens eine Einrichtung zur Erzeugung eines einreihigen teilungsfreien Behälterstroms umfassen, insbesondere eine Riemenstation und/oder eine oder mehrere Abbaustufen, die stromaufwärts vor oder an dem Einlaufförderband angeordnet ist. Durch eine solche Einrichtung kann eine im Behälterstrom existierende Teilung raumsparend entfernt werden und ggf. Lücken zugefahren werden.

In einer Ausgestaltung kann das Einlaufförderband mindestens eine Einrichtung, insbesondere eine Riemenstation, zur Lückenbildung im Behälterstrom für ein Einfahren eines Trennelements zwischen zwei Behältern umfassen. Dies kann verhindern, dass Stöße, übermäßiger Staudruck oder anderweitige Schäden beim Einfahren der Trennelemente zwischen zwei Behälter entstehen. Die Einrichtung kann auch so ausgebildet sein, dass nach dem Einfahren des Trennelements die Lücke durch die Riemenstation wieder geschlossen werden kann.

In einer weiteren Ausgestaltung kann das Transportband mehrere, insbesondere mindestens drei, aufeinanderfolgende Bandsegmente umfassen, wobei jedes der Bandsegmente mit Geschwindigkeiten zwischen der ersten und mindestens der zweiten Geschwindigkeit antreibbar ist. Eine Abfolge von Bandsegmenten ermöglicht eine genauere Steuerung der Geschwindigkeitsprofile von Abschnitten des Transportbands.

In einer weiteren Ausgestaltung kann jedes der mehreren Bandsegmente so ausgebildet sein, dass ein Bandsegment dann aus mindestens der zweiten Geschwindigkeit in die erste Geschwindigkeit abgebremst wird, wenn, insbesondere sobald, ein Behälterpulk das betroffene Bandsegment vollständig verlassen hat. Durch eine solche Steuerung der Bandsegmente kann der auf einen von einem Trennelement gebremste Behälterpulk ausgeübte Staudruck begrenzt werden.

In einer weiteren Ausgestaltung kann die Antriebstation so ausgebildet sein, dass die zweite Geschwindigkeit um höchstens 20%, bevorzugt höchstens 10%, größer als die erste Geschwindigkeit ist. Dies kann den Staudruck auf den Trennelementen weiter begrenzen und erlaubt es trotzdem, die gewünschte Lückengröße zu erzielen. Dank der relativ geringen Übergeschwindigkeit muss, falls für einen Querüberschub ein Pulk bis zum Stillstand abgebremst werden muss, dieser nicht so stark abgebremst werden.

In einer weiteren Ausgestaltung kann die Antriebstation so ausgebildet sein, dass ein eingefahrenes Trennelement im Bereich des Auslaufförderbands aus dem Behälterstrom ausgefahren wird. Weiter kann die Antriebstation mit einer geschlossenen Bahnkurve ausgebildet sein, so dass die Trennelemente wieder zum Einfahren auf Höhe des Einlaufförderbands bereitgestellt werden können.

In einer weiteren Ausgestaltung kann die Antriebstation so ausgebildet sein, dass pro Behälterpulk noch mindestens ein weiteres Trennelement nach Einlaufen einer zweiten vorbestimmten Behälterstückzahl, die geringer als die vorbestimmte Behälterstückzahl eines Behälterpulks ist, in den Behälterstrom eingefahren wird. Ein zusätzliches Trennelement innerhalb eines Behälterpulks ermöglicht es, den Staudruck auf Behälter und vorlaufendes Trennelement weiter zu reduzieren.

In einer Ausgestaltung kann die Antriebstation ein Linear-Motor-System, insbesondere ein Langstator-Linear-Motor-System, zum Antreiben je eines Trennelements umfassen. Dies ermöglicht eine genaue und leistungsstarke Steuerung der einzelnen Trennelemente.

Die Erfindung umfasst ferner ein Verfahren zum Bilden von Behälterpulks mit vorbestimmter Behälterstückzahl aus einem kontinuierlichen Behälterstrom in einem Transportbereich, insbesondere einer Abfüllanlage, umfassend die Schritte
A) Einlaufen eines einreihigen, insbesondere teilungsfreien, Behälterstroms auf ein Einlaufförderband, das mit einer ersten Geschwindigkeit angetrieben ist,
B) Einfahren eines Trennelements in den Behälterstrom im Bereich des Einlaufförderbands nach Einlaufen der vorbestimmten Behälterstückzahl zum Ausbilden eines Behälterpulks, wobei das Trennelement mit höchstens der ersten Geschwindigkeit, insbesondere eine um maximal 2% niedrigere Geschwindigkeit als die erste Geschwindigkeit, angetrieben ist,
C) Einlaufen des Trennelements und der nachfolgenden Behälter des Behälterpulks auf ein Transportband, das zumindest zeitweise mit einer zweiten Geschwindigkeit größer als die erste Geschwindigkeit angetrieben ist, wobei das Trennelement weiterhin mit höchstens der ersten Geschwindigkeit, insbesondere einer um maximal 2% niedrigeren Geschwindigkeit als die erste Geschwindigkeit, angetrieben ist, und
D) Beschleunigen des Trennelements auf die zweite Geschwindigkeit, wenn, insbesondere sobald, der gesamte Behälterpulk auf das Transportband eingelaufen ist.

Dabei läuft bevorzugt das Trennelement mit der Geschwindigkeit, die für die von den anderen Stationen vorgegebenen Maschinenleistung benötigt wird.

Dieses Verfahren erlaubt es, die obig schon genannten Vorteile der Erfindung zu erreichen. Insbesondere kann dieses Verfahren auch unter Einsatz einer Vorrichtung gemäß obiger Ausführungsformen umgesetzt werden.

Im Folgenden wird die Erfindung anhand vorteilhafter Ausgestaltungen mit Bezug auf die Zeichnungen beispielhaft näher erläutert. Dabei dargestellte vorteilhafte Weiterentwicklungen oder Ausgestaltungen sind jeweils voneinander unabhängig und können beliebig miteinander kombiniert werden, je nachdem, wie dies im Anwendungsfall notwendig ist.
Figur 1 zeigt eine Draufsicht einer Vorrichtung gemäß einer Ausgestaltung der vorliegenden Erfindung.
Figur 2A zeigt die Draufsicht der Vorrichtung der Figur 1 in einem ersten Zustand eines Verfahrens zum Bilden von Behälterpulks gemäß der Erfindung.
Figur 2B zeigt die Draufsicht der Figur 1 in einem zweiten Zustand des Verfahrens.
Figur 2C zeigt die Draufsicht der Figur 1 in einem dritten Zustand des Verfahrens.
Figur 2D zeigt die Draufsicht der Figur 1 in einem vierten Zustand des Verfahrens.
Figur 2E zeigt die Draufsicht der Figur 1 in einem fünften Zustand des Verfahrens.
Figur 2F zeigt die Draufsicht der Figur 1 in einem sechsten Zustand des Verfahrens.

Identische Referenznummern auf den Figuren beziehen sich auf identische Elemente der Erfindung. Die abgebildeten Figuren dienen lediglich der Illustration der Erfindung und sind weder in Bezug auf die Dimensionen noch auf die Proportionen limitierend zu interpretieren.

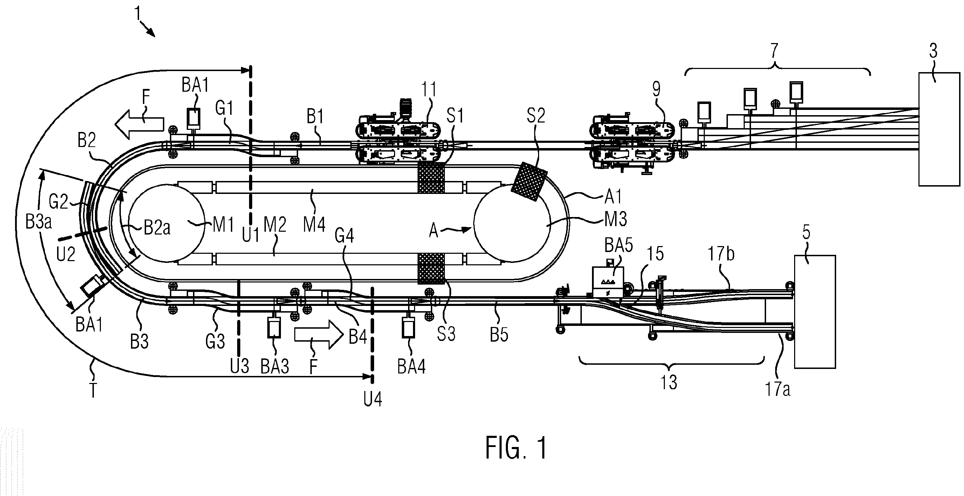

Figur 1 zeigt eine Vorrichtung 1 zum Bilden von Behälterpulks gemäß einer Ausgestaltung der vorliegenden Erfindung. Die Vorrichtung 1 kann sich beispielsweise in einem Transportbereich einer Abfüllanlage befinden. Die Vorrichtung 1 ist zwischen einer vorgeschalteten Behälterarbeitsstation 3, beispielsweise einer Flascheninspektionsanlage oder einem Behälterfüller oder einer Etikettiermaschine, und einer nachgeschalteten Behälterarbeitsstation 5, beispielsweise einer Pufferstation oder einer Packanlage, angeordnet.

Wie aus Figur 1 ersichtlich, umfasst die Vorrichtung 1 ein Einlaufförderband B1, ein Transportband T und ein Auslaufförderband B5. Das Transportband T umfasst in dieser Ausführung drei aufeinanderfolgende Bandsegmente B2, B3, B4, wobei auch mehr oder weniger Segmente zum Einsatz kommen können. Behälter eines Behälterstroms können somit entlang einer Förderrichtung F aus dem Einlaufförderband B1 auf die Bandsegmente B2, B3 und B4 des Transportbands T einlaufen und von dort weiter auf das Auslaufförderband B5. Das Einlaufförderband B1, das Auslaufförderband B5, und die Bandsegmente B2 bis B4 sind in dieser Ausgestaltung durchgehende, endlose Transportbänder, welche zum Fördern von Behältern, beispielsweise aufrechtstehenden Flaschen, geeignet sind. Andere Typen Förderbänder können jedoch auch zum Einsatz kommen.

Die Übergänge zwischen zwei aufeinanderfolgenden Bändern, also die vier Übergänge B1 zu B2, B2 zu B3, B3 zu B4 und B4 zu B5 sind so ausgebildet, dass die jeweiligen Enden zweier aufeinanderfolgender Bänder überlappend nebeneinander, also quer zur Förderrichtung F, angeordnet sind. Beispielsweise überlappt im Übergang zwischen den Bandsegmenten B2 und B3 der Endbereich B2a des ersten Bandsegments B2 mit dem Endbereich B3a des zweiten Bandsegments. Im Überlappungsbereich können Behälter beispielsweise mit Hilfe von jeweiligen Führungsgeländern G1, G2, G3, G4 von einem Band auf das nächste geschoben werden. Die jeweiligen Übergangsstellen sind in Figur 1 mit U1, U2, U3, U4 gekennzeichnet.

Das Einlaufförderband B1, das Auslaufförderband B5, und die Bandsegmente B2 bis B4 werden von jeweiligen Bandantrieben BA1-BA5, beispielsweise Motoren, angetrieben. Dabei können die Geschwindigkeiten der Bänder jeweils unabhängig voneinander gesteuert oder geregelt werden. Die Geschwindigkeiten können dabei von einer zentralen Steuereinheit gesteuert oder geregelt werden.

In dieser Ausführungsform ist das Einlaufförderband B1 vom Bandantrieb BA1 so ausgebildet, dass es mit einer konstanten Geschwindigkeit V1 betrieben wird, die bevorzugt so eingestellt ist, dass sie die Gesamtanlagenleistung nicht verringert. Das Auslaufförderband B5 ist so ausgebildet, dass es vom Bandantrieb BA5 konstant auf einer zweiten Geschwindigkeit V2 betrieben wird, wobei V2 größer als V1 ist. Bevorzugt ist der Geschwindigkeitsunterschied relativ klein, maximal 20, bevorzugt 10% um gegebenenfalls auftretenden Staudruck auf Behälter klein zu halten. Die Bandantriebe BA2, BA3 und BA4 sind so ausgebildet, dass die Bandsegmente B2 bis B4 mit Geschwindigkeiten zwischen der ersten Bandgeschwindigkeit V1 und mindestens der zweiten Bandgeschwindigkeit V1 fahren können.

Die Vorrichtung 1 umfasst ferner eine Antriebstation A mit mindestens einem, hier drei Trennelementen S1, S2, S3, welche beispielsweise paddelförmig ausgebildet sind. Die Anzahl der Trennelemente ist beliebig in Abhängigkeit der benötigten Eigenschaften, beispielsweise Pulklänge, Laufbahnlänge, etc., wählbar.

Die Antriebstation A ist so ausgebildet, dass die Trennelemente S1-S3 in einen Behälterstrom eingefahren werden können, wobei die in den Behälterstrom eingefahrenen Trennelemente S1-S3 mit dem Behälterstrom entlang der aus Einlaufförderband B1, Transportband T und Auslaufförderband B5 zusammengesetzten Behälterlaufbahn mitfahren können. Anschließend fahren sie zurück zum Einlaufförderband B1.

Die Antriebstation A umfasst dazu eine geschlossene Trennelementlaufbahn A1, entlang welcher die Trennelemente S1, S2, S3 angetrieben werden. Die Form der Trennelementlaufbahn A1 folgt dabei der Aufstellung der Behälterlaufbahn, damit die Trennelemente S1, S2, S3 gesteuert in den Behälterstrom ein- und ausgefahren werden können und mit dem Behälterstrom mitfahren können. In dieser Ausführungsform ist die Aufstellung U-förmig ausgebildet.

In alternativen Ausführungsformen kann die Aufstellung der Behälterlaufbahn auch kreisbogenförmig oder polygonal mit abgerundeten Ecken sein. Die Trennelementlaufbahn A1 wird dann entsprechend ausgebildet.

Die Antriebstation A1 umfasst in dieser Ausführungsform vier Antriebsvorrichtungen M1, M2, M3, M4, insbesondere Elektromotorvorrichtungen, um die Trennelemente S1-S3 anzutreiben. Insbesondere treiben die Vorrichtungen M2 und M4 die Trennelemente S1-S3 in den geraden Strecken der Trennelementlaufbahn A1 parallel zum Einlaufförderband B1 und dem Auslaufförderband an. Die Vorrichtungen M1 und M3 sind halbkreisförmig ausgebildet und verbinden die zwei linearen Strecken. Die Antriebstation ist dabei so ausgelegt, dass sich jeweils höchstens ein Trennelement S1, S2, S3 auf einer der vier Strecken befindet. Somit können die Geschwindigkeiten der Trennelemente S1, S2, S3 unabhängig voneinander gesteuert bzw. geregelt werden. Die Trennelemente sind so ausgebildet, dass sie mit Geschwindigkeiten zwischen der ersten Geschwindigkeit V1 und der zweiten Geschwindigkeit V2 angetrieben werden können.

In einer alternativen Ausführungsform kann die Antriebstation A1 ein Linear-Motor-System zum Antreiben der Trennelemente S1-S3 entlang der gesamten Trennelementlaufbahn A1 umfassen. Dabei wird jedem Trennelement ein entsprechendes Shuttle zugeordnet, dass unabhängig von den anderen Shuttlen am Stator gesteuert bzw. geregelt bewegt werden kann. Da das Linear-Motor-System den einzelnen Trennelementen S1-S3 nur eine begrenzte Bremsleistung ermöglicht, werden in einem solchen System mehr Trennelemente in einem Behälterpulk zum Einsatz kommen, insbesondere für jeden Behälter ein Trennelement.

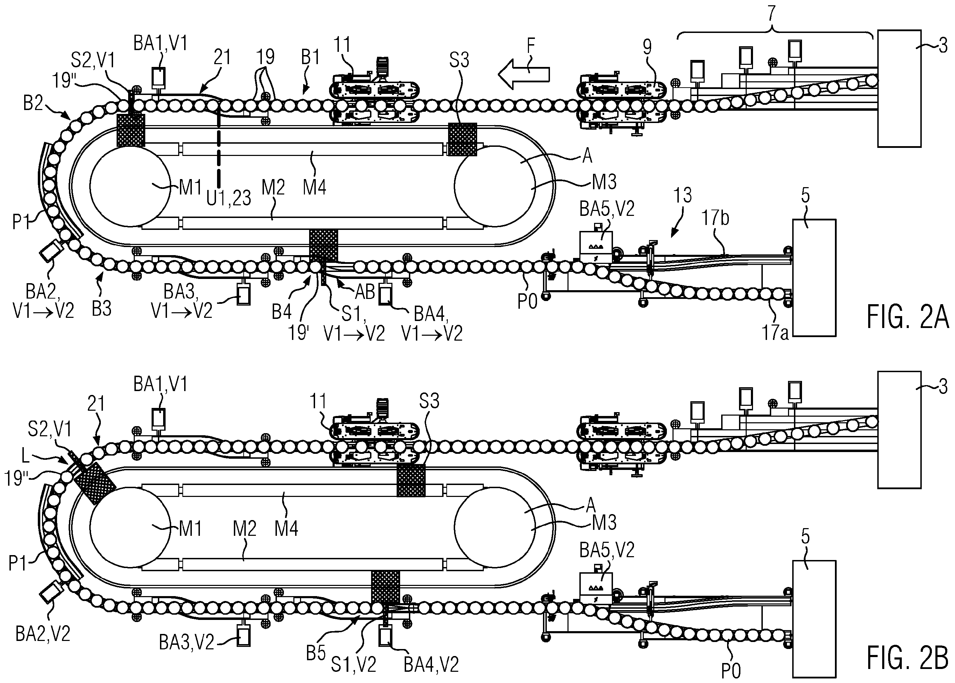

Die Antriebstation A ist zum Einfahren der Trennelemente S1-S3 in den Behälterstrom im Bereich des Einlaufförderbands B1 ausgebildet. Die Antriebstation A ist weiter so ausgebildet, dass die Trennelemente S1-S3 im Bereich des Auslaufförderbands B5 aus dem Behälterstrom herausgefahren werden können. Das Ein- und Ausfahren der Trennelemente S1-S3 ist mit dem in Bezug auf Figuren 2A bis 2F beschriebenen Verfahren genauer erklärt.

Die Vorrichtung 1 kann gemäß einer Variante eine Abbaustufeneinrichtung 7 und/oder eine erste Riemenstation 9, und/oder eine zweite Riemenstation 11 aufweisen.

Die Abbaustufeneinrichtung 7 dient zum Abbremsen von Behältern, wodurch die Teilung, bzw. der Abstand zwischen Behältern verringert werden kann, wie aus dem Stand der Technik bekannt. Die erste Riemenstation 9 kann eingesetzt werden, um durch weiteres Abbremsen eines Behälterstroms größere Lücken schließen zu können. Solche Lücken können auftreten, wenn beispielsweise eine Flascheninspektionsvorrichtung fehlerhafte Behälter aussortiert. Mit der Abbaustufeneinrichtung 7 und der Riemenstation 9 kann somit ein teilungsfreier Behälterstrom bereitgestellt werden, in dem die Behälter Stoß an Stoß stehen.

Die zweite Riemenstation 11 kann stationär am Einlaufförderbands B1 angeordnet sein. Die zweite Riemenstation 11 dient dazu, eine Lücke im teilungsfreien Behälterstrom bereitzustellen, welche das Einfahren der Trennelemente S1 in den Behälterstrom vereinfacht. Nach Durchlaufen der zweiten Riemenstation 11 sind die Behälter und das eingefahrene Trennelement wieder Stoß an Stoß.

Die Riemenstationen 9 und 11 ermöglichen unabhängig von den Behältereigenschaften ein dynamisches Bremsen des Behälterstroms, auch Rampen genannt, und fangen Staudruck ab.

Die Vorrichtung 1 kann gemäß einer weiteren Variante auch eine Weichenanordnung 13 aufweisen, um Behälter, die einbahnig laufen, auf zwei Bahnen verteilen zu können. Die Weichenanordnung 13 ist dem Auslaufförderband B5 nachgeschaltet, sodass über zwei Förderspuren 17a, 17b Behälterpulks in die nachgeschaltete Behälterarbeitsstation 5 einlaufen können. Die Weichenanordnung 13 umfasst ein Weichenelement 15, das zwischen den zwei Förderspuren 17a, 17b schalten kann.

Im Folgenden wird in Bezug auf die Figuren 2A bis 2E ein erfindungsgemäßes Verfahren zum Bilden von Behälterpulks mit vorbestimmter Behälterstückzahl anhand der Vorrichtung 1 gemäß Figur 1 beschrieben. Die Figur 2A zeigt die Draufsicht der Vorrichtung der Figur 1 in einem ersten Zustand des Verfahrens zum Bilden von Behälterpulks.

Weiter können an verschiedenen Stellen entlang der Förderbänder Sensoren angeordnet sein, um vorbeilaufende Behälter zu zählen, wie nachfolgend beschrieben wird. So kann ein Sensor im Bereich der Abbaustufeneinrichtung 7 vorhanden sein, um den Füllstand überwachen zu können. Ein weiterer Sensor kann im Bereich der ersten Riemenstation 9 angeordnet sein, um Behälter zu zählen und um die Trennelemente mit dem Behälterstrom synchronisieren zu können. Ein weiterer Sensor kann dann im Bereich der zweiten Riemenstation angeordnet sein, um die Behälter zu zählen und um die Abläufe synchronisieren zu können. Ein weiterer Sensor kann am Übergang von Einlaufförderband B1 zum ersten Bandsegment B2 angeordnet sein. Hier kann die Anzahl der Behälter gezählt oder ein eingefahrenes Trennelement erkannt werden um feststellen zu können, ob ein Pulk vollständig auf das Transportband T aufgelaufen ist, um dann die Geschwindigkeiten entsprechend zu regeln.

Wie aus Figur 2A ersichtlich, befindet sich auf der Behälterlaufbahn der Vorrichtung 1 ein kontinuierlicher Strom von Behältern 19, welche einen Behälterstrom 21 bilden.

Die Behälter 19 wurden von der vorgeschalteten Behälterarbeitsstation 3 kommend in einem kontinuierlichen Behälterstrom 21 entlang einer Förderrichtung F auf das Einlaufförderband B1 der Vorrichtung 1 eingespeist. Teilungsabstände und Fehlstellen im Behälterstrom 21 wurden durch die Abbaustufeneinrichtung 7 und die erste Riemenstation 9 entfernt.

Wie bereits in Bezug auf Figur 1 erwähnt, nutzt die Antriebsstation A in dieser Ausgestaltung drei Trennelemente S1, S2, S3. In der Figur 2A befinden sich die Trennelemente S1 und S2 in einem in den Behälterstrom 21 eingefahrenen Zustand, während sich das Trennelement S3 in einem in Bezug auf den Behälterstrom 21 ausgefahrenen Zustand befindet.

Das Einlaufförderband B1 und das Auflaufförderband B5 werden von ihren jeweiligen Bandantrieben BA1, BA5 mit konstanten Geschwindigkeiten V1, V2 betrieben, wobei V2 bis zu 20%, insbesondere 10% größer als V1 sein kann.

Das Trennelement S1 wird von der Antriebstation A vor dem Behälterpulk P1, also direkt vor dem ersten Behälter 19' des Pulks P1, eingefahren. Der dem Trennelement S1 nachlaufende Behälterpulk P1 befindet sich vollständig auf dem Transportband T, bzw. vollständig auf den Bandsegmenten B2, B3 und B4, da der letzte Behälter 19" des Pulks P1 eine Übergangsstelle U1 zwischen dem Einlaufförderband B1 und dem Anfang des Transportbands T, bzw. des in Förderrichtung F ersten Bandsegments B2, überschritten hat.

Ein Sensor 23 kann an der Übergangsstelle U1 eingesetzt werden, um die Vollständigkeit des Pulks P1 auf dem Transportband T zu detektieren. Dabei kann es sich beispielsweise um einen Zähler handeln, welcher die vorbeilaufenden Behälter 19 zählt, oder aber um eine Erkennungsvorrichtung, die das Trennelement erkennt. Zusätzliche Sensoren können entlang der Behälterlaufbahn zur Unterstützung oder Kontrolle vorgesehen sein.

Wenn, bzw. sobald, der Behälterpulk P1 vollständig die Übergangsstelle U1 überschritten hat und auf das Transportband T eingelaufen ist, wird das Transportband T insbesondere über die Steuereinheit durch die Bandantriebe BA2, BA3, BA4 der entsprechenden Bandsegmente B2, B3, B4 gleichzeitig von V1 auf V2 beschleunigt. Zeitgleich oder etwas zeitversetzt, beispielsweise um 0.1 s verzögert, wird auch das Trennelement S1 von V1 auf V2 beschleunigt. Transportband T und das Trennelement S1 werden dabei insbesondere mit dem gleichen Beschleunigungsprofil beschleunigt.

In einer alternativen Ausführungsform kann die Ausgangsgeschwindigkeit V1 des Trennelements S1 auf einer bis zu 2% niedrigeren Geschwindigkeit als die erste Geschwindigkeit V1 betrieben werden. Beispielsweise kann das Trennelement S1 mit der Geschwindigkeit 0.98 mal V1 betrieben werden. Somit kann die Stabilität des nachfolgenden, teilungsfreien Behälterpulks P1 verbessert werden, da die Behälter durch das schneller laufende Band gegen das Trennelement gedrückt werden. Dabei läuft das Trennelement S1 jedoch mit der Geschwindigkeit, die der Maschinenleistung entspricht, die durch die anderen Stationen, insbesondere die Station 3 oder 5, vorgegeben wird, und das Einlaufband B1 somit etwas schneller. Weiter können die Bandsegmente B2, B3, B4 auf eine Geschwindigkeit größer der zweiten Geschwindigkeit V2 beschleunigt werden, insbesondere auf eine um bis zu 2% größere Geschwindigkeit, um den Behälterpulk stabil geschlossen zu halten, sobald das Trennelement S1 beschleunigt wird.

Der dem Trennelement S2 nachlaufende Behälterstrom 21 läuft auf das Transportband T ein, hat in Figur 2A aber die Übergangsstelle U1 noch nicht mit der vollständigen vorbestimmten Behälterstückzahl für einen weiteren Pulk überschritten. Erfindungsgemäß läuft das Trennelement S2 somit mit der Geschwindigkeit V1 und hält somit trotz der Beschleunigung der Bandsegmente B2, B3, B4 den Behälterstrom 21 teilungsfrei.

Wie zuvor in Bezug auf das Trennelement S1 beschrieben, kann in einer alternativen Ausführungsform auch das Trennelement S2 auf einer bis zu 2% niedrigeren Geschwindigkeit als der Geschwindigkeit V1 betrieben werden. Beispielsweise kann das Trennelement S2 mit der Geschwindigkeit 0.98 mal V2 (0,98*V2) betrieben werden. Somit kann auch die Stabilität des nachfolgenden, teilungsfreien Behälterstroms 21 gewährleistet werden.

Figur 2A zeigt weiter, dass dem Pulk P1 ein Pulk P0 mit einem vorbestimmten Abstand AB vorausläuft. Der Pulk P0 hat das Transportband T, insbesondere das in Förderrichtung F letzte Bandsegment B4, schon verlassen und befindet sich somit auf dem Auslaufförderband B5 und der Förderbahn 17a der Weichenanordnung 13. Somit wird der Pulk P0 mit der Geschwindigkeit V2 in Richtung der nachgeschalteten Behälterarbeitsstation 5 befördert. Die Geschwindigkeit V2 ist hierbei üblicherweise bis zu 20%, insbesondere bis zu 10% größer als die Geschwindigkeit V1.

In einem Beispiel kann der vorbestimmte Abstand AB 0.4m und die Länge eines Pulks mit vorbestimmter Behälterstückzahl 5.5m betragen. Somit muss der Abstand zwischen zwei Trennelementen S1-S3 von 5.5m auf 5.9m, also um ca. 7.3%, vergrößert werden. Um eine solche Lücke erzeugen zu können, wird die Geschwindigkeit V2 geringfügig bezogen auf die erste Geschwindigkeit V1 erhöht, beispielsweise um 10% überhöht. Diese Geschwindigkeitsüberhöhung zwischen zwei aufeinanderfolgenden Behälterpulks, hier P0 und P1, muss über einen Weg von 5,9m aufrechterhalten werden, damit die Taktzeit der Behälterpulks, beispielsweise für eine Querüberschub eines Pulks in der nachfolgenden Station 5, gleichbleibt und die Lücke von 0.4m gezogen werden kann. Dadurch kann auch ein Aufstauen von Behältern vor dem Einlaufen in die nachfolgende Station 5 verhindert werden.

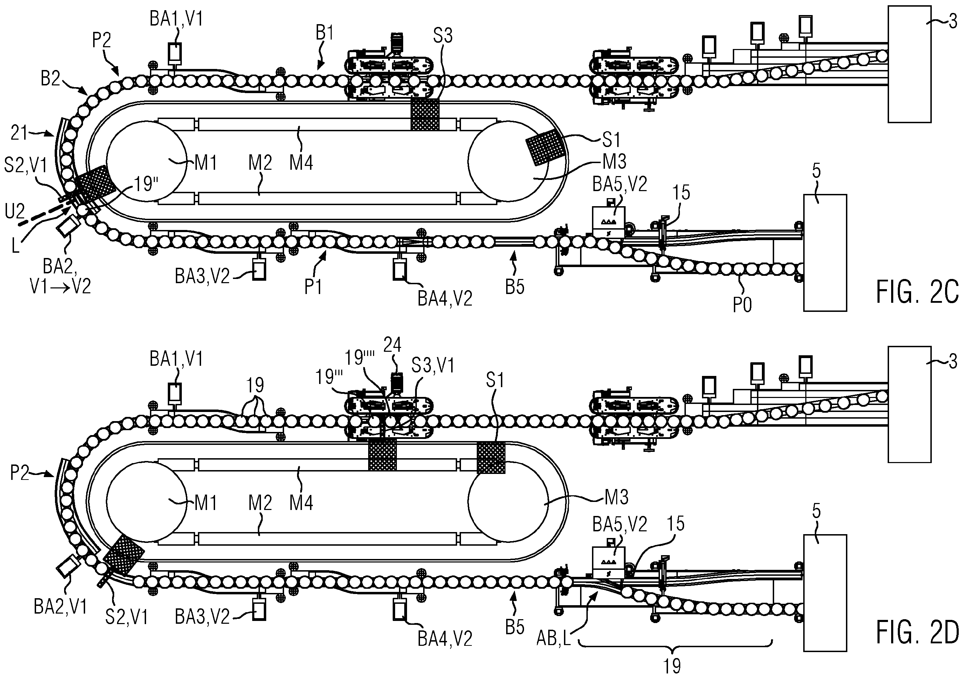

Im Bereich der 2. Riemenstation 11 erkennt man, dass aufeinanderfolgende Behälter kurzzeitig auseinandergezogen werden, danach aber wieder Stoß an Stoß laufen. Dies wird nachfolgend im Zusammenhang mit Figur 2D noch näher erläutert. Das dritte Trennelement S3 ist noch nicht in den Behälterstrom eingefahren.

Im Zustand, der in Figur 2B gezeigt wird, laufen die Bandsegmente B2, B3, B4 des Transportbands T alle mit der Geschwindigkeit V2 oder ggf. etwas mehr, wie oben erläutert. Das Trennelement S2 läuft mit Geschwindigkeit V1, oder ggf. etwas weniger, weiter und hält somit den Behälterstrom 21 im Vergleich zum vorlaufenden Pulk P1, dessen Trennelement S1 mit V2, oder ggf. etwas weniger läuft, zurück, so dass es zu einer Bildung einer Lücke L zwischen Pulk P1 bzw. dem Pulk-abschließenden Behälter 19" und dem Trennelement S2 und dem nachfolgenden Strom 21 kommt.

Zeitgleich läuft der Anfang des Behälterpulks P1 vom Transportband T, insbesondere von dem dritten, in Förderrichtung F letzten Bandsegment B4, auf das Auslaufförderband B5 ein.

Der dem Pulk P1 vorauslaufende Pulk P0 läuft mit V2 von der Förderbahn 17a und kann ggf. schon in die nachgeschaltete Behälterarbeitsstation 5 einlaufen.

Des Weiteren ist das noch nicht im Behälterstrom 21 eingefahrene Trennelement S3 entlang der Trennelementlaufbahn A1 in den Bereich der Riemenstation 11 gefahren.

In einem nächsten auf Figur 2C dargestellten Zustand wurde das Trennelement S1 im Bereich des Auslaufförderband B5 aus dem Behälterstrom gefahren und zurück in Richtung Einlaufförderband B1 bewegt, um für das nächste Einfahren bereitgestellt zu werden. Der Behälterpulk P1 hat das erste Bandsegment B2 des Transportbands T hinter sich gelassen, da der letzte Behälter 19" des Behälterpulks P1 die Übergangsstelle U2 zwischen Einlaufförderband B1 und Bandsegment B2 überschritten hat.

Dadurch kann das Bandsegment B2 von V2, oder ggf. etwas mehr, wieder zurück auf V1 abgebremst werden. Dies ermöglicht es, den Staudruck auf das Trennelement S2, das sich mit V1 oder ggf. etwas weniger bewegt, sowie auf die Behälter des dem Trennelement S2 folgenden Behälterstroms 21, zu reduzieren. Die Bandsegmente B3 und B4 laufen weiterhin mit V2 oder zur Pulkstabilisierung ggf. etwas mehr. Das Trennelement S1 läuft weiterhin mit V2, wodurch sich die Lücke L vergrößert. Weiter nähert sich das Ende des Pulks P0 dem Ende des Auslaufförderbands B5 und dem Weichenelement 15.

In einem nächsten in Figur 2D dargestellten Zustand erreicht der Anfang des Pulks P1 die Weichenanordnung 19.

Der entstandene Pulkabstand AB zwischen Pulk P1 und Pulk P0 ergibt sich, wie oben erläutert, aus dem Geschwindigkeitsunterschied V2 und V1 und der Länge des Zeitintervalls während bzw. dem Weg auf dem der Geschwindigkeitsunterschied zwischen zwei Trennelementen aufrechterhalten bleibt. Dabei kann auch zusätzlich das Beschleunigungsprofil berücksichtigt werden kann. Der Pulkabstand AB kann so auf einen gewünschten Betrag gebracht werden, der beispielsweise ausreicht, um stromabwärts einen auf Stillstand abgebremsten Pulk quer zur Transportrichtung überzuschieben, ohne dabei den nachfolgenden Pulk abbremsen zu müssen.

Aus Figur 2D ist ferner ersichtlich, dass das zuletzt noch ausgefahrene Trennelement S3, nach Einlauf der vorbestimmen Behälterstückzahl auf das Einlaufförderband B1, in die durch die Riemenstation 11 gezogene Lücke zwischen zwei Behältern 19‴ und 19ʺʺ in den Behälterstrom 21 eingefahren ist. Dazu kann beispielsweise ein weiterer Sensor 24 die Anzahl der eingelaufenen Behälter 19 abzählen. Somit ist der dem Pulk P1 nachlaufende Pulk P2 gebildet.

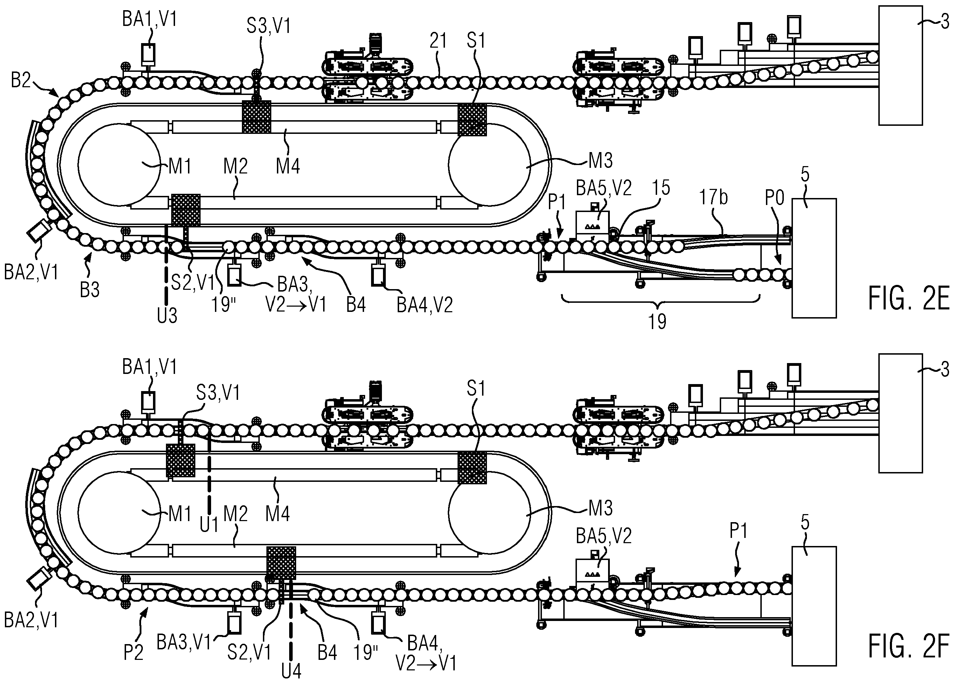

Figur 2E zeigt einen nachfolgenden Zustand, in dem der Pulk P0 vollständig auf die Förderbahn 17a eingelaufen ist und nach der Schaltung des Weichenelements 15 der Pulk P1 auf die zweite Förderbahn 17b der Weichenanordnung 13 einläuft. Der Pulk P1 hat im Zustand der Figur 2E inzwischen vollständig das mittlere Bandsegment B3 des Transportbands T verlassen, in dem der Behälter 19" des Pulks P1 die Übergangsstelle U3 zwischen Bändern B3 und B4 überschritten hat. Daher wird das Bandsegment B3 zurück auf V1 abgebremst, wie vorher schon das Bandsegment B2 (siehe Figur 2C), um den Staudruck auf die Behälter und das Trennelement S2, das weiterhin mit V1 oder ggf. etwas weniger läuft, zu reduzieren. Das Bandsegment B4, auf dem sich noch ein Teil des Pulks P1 befindet, läuft dagegen weiterhin mit V2 oder ggf. etwas mehr.

Das Trennelement S3 läuft direkt hinter Pulk P2 mit Geschwindigkeit V1 oder ggf. etwas weniger, wie oben erläutert, vor dem Behälterstrom 21 mit, und befindet sich noch im Bereich des Einlaufbandes B1.

Im Zustand der Figur 2F hat der letzte Behälter 19" des Pulks P1 die letzte Übergangsstelle U4 des Transportbands T, zwischen den Bändern B4 und B5, überschritten. Somit hat der Pulk P1 das Transportband T vollständig durchlaufen. Daher wird auch das Bandsegment B4 von V2 oder ggf. etwas mehr zurück auf V1 abgebremst. Das Trennelement S2 läuft weiterhin mit V1 oder ggf. etwas weniger. Allerdings ist der Pulk P2 gerade vollständig auf das Transportband T, bzw. mit dem letzten Behälter 19‴ über den Übergabepunkt U1 auf das Bandsegment B2 gefahren, das noch mit V1 fährt.

Der erste Pulk P0 ist nicht mehr sichtbar. Er kann beispielsweise in der Arbeitsstation 5 abgebremst worden sein und quer zur Fahrtrichtung auf einer Pufferfläche abgelegt worden sein. Das Abbremsen stört dabei das Einlaufen des zweiten Pulks P1 nicht, da dieser auf der zweiten Förderbahn 17b läuft.

Anschließend läuft das Verfahren mit dem nachfolgenden Pulk P2 entsprechend den in den Figuren 2A bis 2F gezeigten Zuständen wieder von vorne an.

Die Vorrichtung 1 bildet Behälterpulks P0, P1, P2, welche mit dem vorbestimmten Pulkabstand AB voneinander getrennt sind. Somit können die Pulks P0, P1, P2 raumsparend, genau und sicher auf mehrere Bahnen mit geringem Staudruck bereitgestellt bzw. verteilt werden.

### Bezugszeichen

1 Vorrichtung
3 vorgeschaltete Behälterarbeitsstation
5 nachgeschaltete Behälterarbeitsstation
7 Abbaustufeneinrichtung
9 erste Riemenstation
11 zweite Riemenstation
13 Weichenanordnung
15 Weichenelement
17a, 17b Förderbahnen der Weichenanordnung
19, 19', 19", 19‴, 19ʺʺ Behälter
21 nachfolgender Behälterstrom
23 Sensor
24 weiterer Sensor
A Antriebstation
A1 Trennelementlaufbahn
AB Pulkabstand
B1 Einlaufförderband
B2 erstes Bandsegment des Transportbandes
B2 zweites Bandsegment des Transportbandes
B2 drittes Bandsegment des Transportbandes
B5 Auslaufförderband
B2a, B3a Bandsegmentendbereiche
BA1, BA2, BA3, BA4, BA5 Bandantriebe
F Förderrichtung
G1, G2, G3, G4 Führungsgeländer
L Lücke
M1, M2, M3, M4 Antriebsvorrichtungen
P0, P1, P2 Pulks
S1, S2, S3 Trennelemente
T Transportband
U U1, U2, U3, U4 Übergangsstellen zwischen Bändern
V1 erste Geschwindigkeit
V2 zweite Geschwindigkeit

## Patentansprüche

1. Vorrichtung zum Bilden von Behälterpulks (P0-P2) mit einer vorbestimmten Behälterstückzahl aus einem kontinuierlichen Behälterstrom in einem Transportbereich, insbesondere einer Abfüllanlage, umfassend
ein Einlaufförderband (B1) zur Aufnahme eines Behälterstroms (21), welches mit einer ersten Geschwindigkeit (V1) antreibbar ist,
ein Auslaufförderband (B5), welches mit einer zweiten Geschwindigkeit (V2) größer als die erste Geschwindigkeit (V1) antreibbar ist,
ein zwischen dem Einlaufförderband (B1) und dem Auslaufförderband (B5) zwischengeschaltetes Transportband (T), welches so ausgebildet ist, dass es zumindest zeitweise mit mindestens der zweiten Geschwindigkeit (V2) antreibbar ist, sowie
eine Antriebstation (A) zum Einfahren von einem oder mehreren Trennelementen (S1-S3) in den Behälterstrom (21),
wobei die Antriebstation (A) so ausgebildet ist, dass zum Ausbilden von Behälterpulks (P0,-P2) nach Einlaufen der vorbestimmten Behälterstückzahl ein Trennelement (S1-S3) im Bereich des Einlaufförderbands (B1) in den Behälterstrom (21) eingefahren wird und vor den im Behälterstrom (21) nachfolgenden Behältern (19) mitfährt,
und dass die Geschwindigkeit eines in den Bereich des Transportbands (T) eingefahrenen Trennelements (S1-S3) auf höchstens die erste Geschwindigkeit (V1), insbesondere auf eine um maximal 2% niedrigere Geschwindigkeit als die erste Geschwindigkeit (V1), gesteuert ist, solange der nachfolgende Behälterpulk (P0-P2) nicht vollständig auf das Transportband (T) eingelaufen ist.

2. Vorrichtung zum Bilden von Behälterpulks nach Anspruch 1, wobei die Antriebstation (A) so ausgebildet ist, dass die Geschwindigkeit eines auf das Transportband (T) eingefahrenen Trennelements (S1-S3) auf die zweite Geschwindigkeit (V2) beschleunigt wird, wenn, insbesondere sobald, der dem Trennelement (S1-S3) nachlaufende Behälterpulk (P0-P2) vollständig auf das Transportband (T) eingefahren ist.

3. Vorrichtung zum Bilden von Behälterpulks nach Anspruch 2, wobei das Transportband (T) so ausgebildet ist, dass das Transportband (T) mindestens immer dann in der zweiten Geschwindigkeit (V2) oder eine höchstens um 2% größere Geschwindigkeit als die zweite Geschwindigkeit angetrieben wird, wenn ein Trennelement (S1-S3) auf die zweite Geschwindigkeit beschleunigt ist.

4. Vorrichtung zum Bilden von Behälterpulks nach einem der Ansprüche 1 bis 3, mit mindestens einer Einrichtung zur Erzeugung eines einreihigen teilungsfreien Behälterstroms (21), insbesondere eine Riemenstation (9) und/oder eine oder mehrere Abbaustufen (7), die stromaufwärts vor oder an dem Einlaufförderband (B1) angeordnet ist.

5. Vorrichtung zum Bilden von Behälterpulks nach einem der Ansprüche 1 bis 4, wobei das Einlaufförderband (B1) mindestens eine Einrichtung, insbesondere eine Riemenstation (11), zur Lückenbildung im Behälterstrom (21) für ein Einfahren eines Trennelements (S1-S3) zwischen zwei Behältern (19‴, 19ʺʺ), umfasst.

6. Vorrichtung zum Bilden von Behälterpulks nach einem der Ansprüche 1 bis 5, wobei das Transportband (T) mehrere, insbesondere mindestens drei, aufeinanderfolgende Bandsegmente (B2-B4) umfasst, wobei jedes der Bandsegmente (B2-B4) mit Geschwindigkeiten zwischen der ersten (V1) und mindestens der zweiten (V2) Geschwindigkeit antreibbar ist.

7. Vorrichtung zum Bilden von Behälterpulks nach Anspruch 6, wobei jedes der mehreren Bandsegmente (B2-B4) so ausgebildet ist, dass ein Bandsegment (B2-B4) dann aus mindestens der zweiten Geschwindigkeit (V2) in die erste Geschwindigkeit (V1) abgebremst wird, wenn, insbesondere sobald, ein Behälterpulk (P0-P2) das betroffene Bandsegment (B2-B4) vollständig verlassen hat.

8. Vorrichtung zum Bilden von Behälterpulks nach einem der Ansprüche 1 bis 7, wobei die Antriebstation (A) so ausgebildet ist, dass die zweite Geschwindigkeit (V2) um höchstens 20%, bevorzugt höchstens 10% größer als die erste Geschwindigkeit (V1) ist.

9. Vorrichtung zum Bilden von Behälterpulks nach einem der Ansprüche 1 bis 8, wobei die Antriebstation (A) so ausgebildet ist, dass ein eingefahrenes Trennelement (S1-S3) im Bereich des Auslaufförderbands (B5) aus dem Behälterstrom (21) ausgefahren wird.

10. Vorrichtung zum Bilden von Behälterpulks nach einem der Ansprüche 1 bis 9, wobei die Antriebstation (A) so ausgebildet ist, dass pro Behälterpulk (P0-P2) noch mindestens ein weiteres Trennelement (S1-S3) nach Einlaufen einer zweiten vorbestimmten Behälterstückzahl, die geringer als die vorbestimmte Behälterstückzahl eines Behälterpulks ist, in den Behälterstrom (21) eingefahren wird.

11. Vorrichtung zum Bilden von Behälterpulks nach einem der Ansprüche 1 bis 10, wobei die Antriebstation (A) ein Linear-Motor-System, insbesondere ein Langstator-Linear-Motor-System, zum Antreiben je eines Trennelements (S1-S3) umfasst.

12. Verfahren zum Bilden von Behälterpulks (P0-P2) mit vorbestimmter Behälterstückzahl aus einem kontinuierlichen Behälterstrom in einem Transportbereich, insbesondere einer Abfüllanlage, umfassend die Schritte
A) Einlaufen eines einreihigen, insbesondere teilungsfreien, Behälterstroms (21) auf ein Einlaufförderband (B1), das mit einer ersten Geschwindigkeit (V1) angetrieben ist,
B) Einfahren eines Trennelements (S1-S3) in den Behälterstrom (21) im Bereich des Einlaufförderbands (B1) nach Einlaufen der vorbestimmten Behälterstückzahl zum Ausbilden eines Behälterpulks (P0-P2), wobei das Trennelement (S1-S3) mit höchstens der ersten Geschwindigkeit (V1), insbesondere eine um maximal 2% niedrigere Geschwindigkeit als die erste Geschwindigkeit (V1), angetrieben ist,
C) Einlaufen des Trennelements (S1-S3) und der nachfolgenden Behälter des Behälterpulks (P0-P2) auf ein Transportband (T), das zumindest zeitweise mit einer zweiten Geschwindigkeit (V2) größer als die erste Geschwindigkeit (V1) angetrieben ist, wobei das Trennelement (S1-S3) weiterhin mit höchstens der ersten Geschwindigkeit (V1), insbesondere einer um maximal 2% niedrigeren Geschwindigkeit als die erste Geschwindigkeit (V1), angetrieben ist, und
D) Beschleunigen des Trennelements (S1-S3) auf die zweite Geschwindigkeit (V2), wenn, insbesondere sobald, der gesamte Behälterpulk (P0-P2) auf das Transportband (T) eingelaufen ist.
